# EUROPÄISCHE PATENTANMELDUNG

(11) **EP 1 589 599 A1**
(43) Veröffentlichungstag der Anmeldung: **26.10.2005**
(21) Anmeldenummer: 04405238.9
(22) Anmeldetag: 16.04.2004
(51) Int. Cl.: H01M 6/52, H01M 10/54, C22B 7/00

(54) **Verfahren und Vorrichtung zum Recycling von Batterien**

(71) Anmelder: Hochschule Rapperswil, Institut für angewandte Umwelttechnik, 8640 Rapperswil (CH)
(72) Erfinder: Bunge, Rainer, 8057 Zürich (CH)

(57) **Zusammenfassung**

Die Erfindung betrifft ein Verfahren und eine Vorrichtung zum Recycling von Batterien aus Haushaltsmüll. Das erfindungsgemässe Verfahren besteht darin, den Müll in rostgefeuerten Anlagen zu verbrennen, und die zusammen mit der Schlakke ausgetragenen Batterien durch eine Kombination von Magnetscheidung, Klassierung und Sortierung zurückzugewinnen. Die erfindungsgemässe Vorrichtung umfasst eine rostgefeuerte Verbrennungsanlage und eine Anlage zur Abtrennung der Batterien aus der Schlacke der rostgefeuerten Müllverbrennungsanlage. Diese Anlage umfasst zweckmässigerweise einen Magnetabscheider und eine Sortiervorrichtung zum Aussortieren der Batterien aus einer Klasse des magnetischen Gutes.

## Beschreibung

Die Erfindung fällt in das Gebiet der Umwelttechnologie. Sie betrifft ein Verfahren und eine Vorrichtung nach den Oberbegriffen der unabhängigen Patentansprüche. Verfahren und Vorrichtung dienen dazu, die Umweltbelastung mit Schwermetallen aus Batterien zu reduzieren. Der Begriff "Batterien" schliesst im Folgenden auch Klein-Akkumulatoren ein, insbesondere die bekannten Nickel-Cadmium Akkus.

Die konventionellen Haushaltsbatterien (z.B. Stabbatterien und Blockbatterien mit den Bezeichnungen Micro, Mignon, Baby und Mono, bzw. 4,5V-Block und 9V-Block) beinhalten grosse Mengen an Schadstoffen, insbesondere an Schwermetallen wie Nickel, Cadmium, Blei, Quecksilber, Mangandioxid, Zink, Lithium. Werden solche Batterien zusammen mit dem Haushaltsmüll in Deponien abgelagert oder in Kehrichtverbrennungsanlagen verbrannt, so kann nicht ausgeschlossen werden, dass diese Schadstoffe langfristig in die Umwelt gelangen. Daher werden in vielen Industrieländern Anstrengungen unternommen, um die Batterien aus Haushaltmüll fernzuhalten und durch eine geeignete Aufarbeitung zu rezyklieren.

Stand der Technik im Batterierecycling ist die Separatsammlung der Batterien. In der Schweiz werden beispielsweise in Kaufhäusern Boxen bereitgestellt, in die der Konsument die verbrauchten Batterien einwerfen kann. Diese Boxen werden gesammelt und die darin enthaltenen Batterien werden in eine thermische Aufbereitungsanlage abgeführt. Hier werden die Schwermetalle aus den Batterien in einem Hochtemperaturprozess abgedampft und zurückgewonnen. Problematisch ist beim Batterierecycling der Umstand, dass die Recyclingquote mittels Separatsammlung weit unter 100% liegt. Trotz aller Anstrengungen durch forcierte Öffentlichkeitsarbeit liegt selbst in der Schweiz die Recylingquote lediglich bei rund 65%. Etwa ein Drittel der Batterien gerät also trotz Separatsammlung in den Müll. In Deutschland sind es trotz gesetzlichen Vorschriften zur Rückgabe von verbrauchten Batterien lediglich ein Drittel der verkauften Batterien, welche wieder zurückgegeben werden. Es gelangen allein in Deutschland daher jährlich ca. 400 Tonnen Cadmium, 2 Tonnen Quecksilber, 7 Tonnen Silber, 650 Tonnen Nickel und 3000 Tonnen Zink aus Batterien in die Umwelt.

Nach dem Stand der Technik gibt es Verfahren, mit denen Metallstücke, und mit diesen auch Batterien mit metallischem Mantel, aus dem Rohmüll zurückgewonnen werden können. So sind Anlagen zur "mechanisch/biologischen Aufbereitung" (MBA) in einer vorbereitenden Prozessstufe mit Geräten ausgerüstet, die unter anderem auch Batterien aus dem Rohmüll entfernen. Problematisch ist hierbei, dass die Batterien häufig nicht einzeln vorliegen, sondern im Verbund mit elektronischen Geräten. Dieser Verbund kann nur durch Feinschredderung des gesamten Mülls aufgetrennt werden. Die Feinschredderung ist eine sehr kostenintensive Massnahme, die sich nur dann lohnt, wenn der aufbereitete Müll als "Ersatzbrennstoff" ausserhalb von Müllverbrennungsanlagen verwendet werden kann. Müll, der in einer Müllverbrennungsanlage (MVA) verbrannt werden soll, wird in der Regel nicht vorgängig aufbereitet. So gelangen die darin enthaltenen Batterien in die Müllverbrennungsanlage.

Nach verbreiteter Meinung in Fachkreisen werden die Batterien in der Müllverbrennungsanlage den Feuerungstemperaturen von etwa 1000°C ausgesetzt, wobei die meisten Batterien aufplatzen und die darin enthaltenen Schwermetalle verdampfen. Diese Schwermetalle sollen dann über die abziehenden Rauchgase in die Rauchgasreinigungsrückstände gelangen (z.B. Martin Lemann "Heavy Metals in MWI-Residues"; 1st International Battery-Recycling Congress, Lucerne 1995). Zu ähnlichen Ergebnissen gelangt man, wenn man die in einem Poster des Institutes für Wassergüte und Abfallwirtschaft der TU Wien im April 2004 veröffentlichen Untersuchungen zu den Gehalten an Batterien in österreichischen Müllverbrennungsschlacken zugrunde legt.

Der Erfindung liegt die Aufgabe zugrunde, die Umweltbelastung mit Schwermetallen aus Batterien zu reduzieren, insbesondere Batterien aus Haushaltsmüll zurückzugewinnen.

Diese Aufgabe wird erfindungsgemäss gelöst durch das Verfahren und die Vorrichtung, wie sie in den Patentansprüchen definiert sind.

Nach dem erfindungsgemässen Verfahren werden die Batterien aus dem Haushaltmüll gewonnen, indem der batteriehaltige Müll in einer rostgefeuerten Müllverbrennungsanlage verbrannt wird und die Batterien aus der Rostschlacke abgetrennt werden.

Es wurde von uns gefunden, dass - im Gegensatz zur verbreiteten Meinung der Fachwelt - in rostgefeuerten Müllverbrennungsanlagen Batterien überraschenderweise nicht in die eigentliche Verbrennungszone geraten. Vielmehr entmischen sich die Batterien wegen ihres hohen spezifischen Gewichtes durch den Schürprozess der Rostfeuerung vom übrigen Abfall und wandern im Gutbett nach unten, bis sie auf dem Rost liegen bleiben. Der durch die Rostelemente strömende Unterwind kühlt nicht nur den Rost selbst, sondern auch die unmittelbar darauf liegenden Batterien. Entgegen der in Fachkreisen verbreiteten Meinung platzt der ganz überwiegende Anteil dieser Batterien daher nicht auf, sondern wird - physikalisch nahezu unversehrt - mit der Schlacke ausgetragen. Besonders ausgeprägt ist dieser Effekt in Rostfeuerungen, die mit einem Vorschubrot ausgerüstet sind. Je nach Auslegung und Betriebsweise des Rostes tritt der Effekt jedoch auch auf Rückschubrosten ein.

Die Erklärung für den in mehreren Studien festgestellten "Schwund" an Batterien in Müllverbrennungsanlagen liegt nicht in einer Zerstörung der Batterien im Verbrennungsprozess, sondern in folgendem Umstand begründet. Bei diesen Studien wurden die mittels Magnetabscheider aus der Schlacke zurück gewonnenen magnetischen Schrottfraktionen auf die Batteriegehalte untersucht, ohne dass hierbei beachtet wurde, dass die mittels konventioneller Magnetscheidung erfassten Batterien nicht repräsentativ sind für die insgesamt in der Schlacke enthaltenen Batterieanteile. Durch Magnetscheidung werden nämlich vorzugsweise solche Batterien erfasst, die ein hohes Oberflächen/Volumenverhältnis aufweisen, denn bei solchen Batterien ist die magnetische Anziehung des oberflächlichen Stahlmantels gegenüber der entgegengesetzt wirkenden Schwerkraft hoch (z.B. Mignon AA Zellen). Bei den grösseren Batterien kann jedoch die volumenproportionale Schwerkraft die magnetische Anziehung des Mantels überwiegen - solche Batterien werden nicht mehr durch den Magnetscheider ausgehoben (z.B. Monozellen). Zudem werden aus den gleichen Gründen durch den Magnetscheider bevorzugt die an sich seltenen "ausgebrannten" Batterien, also mehr oder minder "leere" magnetische Stahlmäntel erfasst. Weiterhin werden auch die häufig in Schlackebrocken "eingebakkenen" Kleinbatterien durch Magnetscheider nicht ausgehoben. Aufgrund der oben genannten systematischen Fehler werden die tatsächlich in der Müllverbrennungsschlacke enthaltenen Batterieanteile häufig zu niedrig eingeschätzt.

Ein erfindungsgemässes Verfahren zeichnet sich gegenüber der Separatsammlung vor allem durch eine vereinfachte Logistik und damit durch deutlich geringere Kosten aus. Die spezifischen Kosten der Separatsammlung von Batterien sind wegen der insgesamt kleinen erfassten Mengen ausserordentlich hoch. Die Extraktion der Batterien aus der Schlacke von Müllverbrennungsanlagen ist in Gegensatz dazu deutlich billiger. Das erfindungsgemässe Verfahren könnte sogar die Aufhebung von Gesetzesvorschriften und die Aufhebung der Separatsammlung von Batterien ermöglichen, und die generelle Entsorgung der Batterien über den Hausmüll erlauben. Mit dem erfindungsgemässen Verfahren kann nämlich aus dem Haushaltmüll ein sehr hoher Anteil (über 70%) der darin vorliegenden Batterien rezykliert werden. Die Recyclingrate liegt damit beim erfindungsgemässen Verfahren höher als bei der bisherigen Separatsammlung.

Eine Abtrennung der Batterien aus der Rostasche geschieht vorzugsweise durch Entschrotten der Rostasche mittels eines Magnetabscheiders und einem anschliessenden Aussortieren der Batterien aus dem magnetischen Gut.

Zur Entschrottung des Verbrennungsrückstands, welcher Rostasche oder Schlacke genannt wird, wird vorzugsweise ein herkömmlicher Magnetscheider benutzt. Zum Teil werden MVA-Schlacken schon heute durch eine mechanische Aufbereitung entschrottet. Diese Aufbereitungsanlagen können auf einfache Weise mit Geräten nachgerüstet werden, die Batterien aus dem so gewonnenen Schrott zurückgewinnen.

Zur Effizienzsteigerung des Magnetabscheiders werden die Batterien vorteilhaft von Schlakkeanhaftungen befreit, indem sie zuvor eine Grobzerkleinerungsstufe durchlaufen. Diese Grobzerkleinerungsstufe weist z.B. einen Prall- oder Hammerbrecher auf.

Der Schrott wird danach vorteilhaft abgesiebt, wobei in einer Siebfraktion ("Mittelgut") die Batterien angereichert werden. Die Batterien werden dann aus dem Mittelgut der Siebung nach physikalischen Merkmalen als "Batteriekonzentrat" abgetrennt.

Alternativ kann die Schlacke auch zuerst zerkleinert werden, dann abgesiebt werden und dann das Mittelgut der Siebung mittels Magnetscheider von Batterien befreit werden.

Das durch die oben beschriebenen Massnahmen gewonnene Batteriekonzentrat wird schliesslich vorzugsweise einem Hochtemperaturprozess unterzogen, mit welchem die Schwermetalle kontrolliert verdampft und zurückgewonnen werden.

Eine erfindungsgemässe Vorrichtung besteht aus einer rostgefeuerten Kehrichtverbrennungsanlage und einer Anlage zur Abtrennung der Batterien aus der Schlacke der rostgefeuerten Müllverbrennungsanlage. Eine solche Anlage zur Abtrennung der Batterien aus der Schlacke weist vorzugsweise einen Magnetabscheider, eine 2-stufige Klassiervorrichtung für das magnetische Gut und eine Sortiervorrichtung zum Sortieren wenigsten einer Siebfraktion aus der 2-stufigen Klassierung. Wenn eine geeignete Sortiervorrichtung vorhanden ist, kann die Klassiervorrichtung möglicherweise auch übersprungen werden.

Die Untersuchung von Schrott aus Müllverbrennungsschlacken hat gezeigt, dass der überwiegende Teil der Batterien aufgrund ihrer ferromagnetischen Stahlummantelung durch die Magnetscheidung abgetrennt werden kann. Besonders wirksam ist diese Abtrennung nachdem die Schlacke eine Grobzerkleinerungsstufe durchlaufen hat, z.B. einen Prall- oder Hammerbrecher, wobei die Batterien von Schlackeanhaftungen befreit werden. Zur Magnetscheidung von Batterien wird mit Vorteil ein von oben beaufschlagter Trommelmagnetscheider verwendet. Zur anschliessenden Anreicherung der Batterien wird der ausgebrachte magnetische Schrott abgesiebt. Apparativ erfolgte die Absiebung mit Vorteil auf einem Trommelsieb, welches im Gegensatz zu Plansieben weniger zur Verstopfung durch verhakte Schrottstücke neigt. Zudem werden auf dem Trommelsieb allfällige Schlackeanhaftungen von den Batterien entfernt. Auf diesem mit zwei Siebbelägen ausgerüsteten Trommelsieb wird eine Mittelfraktion mit ca. 30-50 mm ausgesiebt, in der die Batterien stark angereichert sind (ca. 2-5 Gewichtsprozent der Mittelfraktion). Die Gewinnung eines hochangereicherten Batteriekonzentrates aus dieser Mittelfraktion kann beispielsweise durch eine optische Sortierung erfolgen.

Hierbei wird der Umstand, dass Batterien zwar verschieden dick sind, jedoch zumeist etwa gleich lang (nämlich ca. 50mm) als Unterscheidungskriterium von den übrigen Eisenteilen ausgenutzt. Alternativ oder zusätzlich kommt eine Dichtesortierung in Frage, in der die (leichteren) Batterien von den (schwereren) Eisenteilen abgetrennt werden. Apparativ wird diese Dichtesortierung am besten durch eine Setzmaschine oder durch eine Schwimm/Sinksortierung realisiert.

Die erfindungsgemässe Vorrichtung umfasst vorzugsweise auch eine Anlage zur Gewinnung von Schwermetallen aus rezyklierten Batterien. Diese kann in an sich bekannter Weise mittels Hochtemperaturbehandlung des Batterieguts die Schwermetalle gewinnen.

Die erfindungsgemässe Vorrichtung kann in zwei oder drei örtlich getrennten Einheiten betrieben werden. Am Ort der Schlackenaufbereitung wird beispielsweise die mit Batterien angereicherte Siebfraktion erzeugt und an einem zentralen anderen Ort (z.B. bei einem Schrottaufbereiter) werden solche Siebfraktionen gesammelt und sortiert. An einem dritten Ort werden schliesslich die Schwermetalle aus den Batterien gewonnen.

## Patentansprüche

1. Verfahren zur Rückgewinnung von Batterien aus Müll, **gekennzeichnet durch** die Prozessschritte:
- Verbrennung des Mülls in einer rostgefeuerten Müllverbrennungsanlage
- Abtrennung der Batterien aus der Rostasche.

2. Verfahren nach Anspruch 1, **dadurch gekennzeichnet, dass** nach der Abtrennung von Batterien aus der Rostasche Schwermetalle aus den Batterien zurückgewonnen werden.

3. Verfahren nach Anspruch 1 oder 2, **dadurch gekennzeichnet, dass** die Abtrennung der Batterien aus der Rostasche mit folgenden Prozessschritten geschieht:
- Entschrottung der Rostasche mittels eines Magnetabscheiders
- Aussortieren der Batterien aus dem Schrott.

4. Verfahren nach Anspruch 3, **dadurch gekennzeichnet, dass** die Aussortierung der Batterien aus dem Schrott mit folgenden Prozessschritten geschieht:
- Anreicherung der Batterien in einer Siebfraktion des magnetischen Schrottes
- Abtrennung der Batterien aus der Siebfraktion.

5. Verfahren nach Anspruch 4, **dadurch gekennzeichnet, dass** die Batterien aus dem magnetischen Schrott in einer Siebfraktion von etwa 20-60 mm, vorzugsweise 30-50 mm angereichert werden.

6. Verfahren nach einem der Ansprüche 3 bis 5, **dadurch gekennzeichnet, dass** die Aussortierung der Batterien z.B. aus dem Schrott oder der Siebfraktion des Schrottes einen Sortierschritt aufweist, bei welchem die Aussortierung aufgrund ihrer geometrischen Abmessungen geschieht, z.B. durch spezielle Klassierer oder durch optische Sortierung.

7. Verfahren nach einem der Ansprüche 3 bis 6, **dadurch gekennzeichnet, dass** die Aussortierung der Batterien z.B. aus dem Schrott oder der Siebfraktion des Schrottes einen Sortierschritt aufweist, bei welchem die Aussortierung aufgrund ihrer Dichte geschieht, z.B. durch Schwimm-/Sink-Sortierung oder auf einer Setzmaschine.

8. Verfahren nach einem der vorangehenden Ansprüche, **dadurch gekennzeichnet, dass** die Rostasche einen Zerkleinerungsprozess durchläuft, bevor die Magnetabscheidung der Batterien stattfindet.

9. Vorrichtung zur Rückgewinnung von Batterien aus Haushaltkehricht, mit
- einer rostgefeuerten Kehrichtverbrennungsanlage mit Vorschubrost oder Rückschubrost, und
- einer Anlage zur Abtrennung der Batterien aus der Schlacke der rostgefeuerten Müllverbrennungsanlage.

10. Vorrichtung nach Anspruch 9, **dadurch gekennzeichnet, dass** die Anlage zur Abtrennung der Batterien aus der Schlacke der rostgefeuerten Müllverbrennungsanlage ausgerüstet ist mit
- einem Magnetabscheider, insbesondere einem Trommelmagnetscheider, und
- eine Zerkleinerungsvorrichtung, insbesondere einen Prall-, oder Hammerbrecher, wobei die Zerkleinerungsvorrichtung im Prozessablauf vor dem Magnetabscheider angeordnet ist.
- einer Einrichtung zum Aussortieren der Batterien aus dem magnetischen Gut.

11. Aus der Schlacke einer Müllverbrennungsanlage gewonnenes Produkt mit einem Anteil an wenigstens 30 Gewichtsprozent Batterien, vorzugsweise wenigstens 50 Prozent, besonders bevorzugt wenigstens 70 Prozent.
